# EUROPEAN PATENT SPECIFICATION

(11) **EP 2 053 922 B1**
(45) Date of publication and mention of the grant of the patent: **02.11.2011**
(21) Application number: 07841272.3
(22) Date of filing: 23.08.2007
(51) Int. Cl.: A21D 13/08, A21D 13/00, A23L 1/164

(54) **BAKED FRUIT FILLED BAR FORTIFIED WITH OMEGA-3 FATTY ACIDS AND PROCESS FOR MAKING SAME**
MIT GEBACKENEN FRÜCHTEN GEFÜLLTER UND MIT OMEGA-3-FETTSÄUREN VERSTÄRKTER RIEGEL UND VERFAHREN ZU SEINER HERSTELLUNG
BARRE DE FRUITS CUITE RENFORCÉE D'ACIDES GRAS OMÉGA-3 ET SES PROCÉDÉS DE FABRICATION

(30) Priority: 23.08.2006 US 823320 P
(43) Date of publication of application: 06.05.2009
(73) Proprietor: Kellogg Company, Battle Creek, MI 49016-3599 (US)
(72) Inventor: FLOYD, Cherie, Pagewood, NSW 2019 (AU); BELLO, Anthony, Carrollton, TX 75006 (US); NEMETH, Katy, Battle Creek, MI 49015 (US)
(74) Representative: Shanks, Andrew
(86) International application number: PCT/US2007/076632
(87) International publication number: WO 2008/024907

(56) References cited:
- EP-A- 1 388 295
- WO-A-03/015528
- WO-A-2007/008384
- WO-A-2007/030718
- US-A- 5 612 074
- DATABASE WPI Week 199525 Derwent Publications Ltd., London, GB; AN 1995-190139 XP002466862 & JP 07 107938 A (SANEIGEN FFI KK) 25 April 1995 (1995-04-25)

## Description

### RELATED APPLICATIONS

The application claims the benefit of U.S. provisional application 60/823,320 filed August 23, 2006.

### STATEMENT REGARDING FEDERALLY SPONSORED RESEARCH

NONE

### TECHNICAL FIELD

This invention relates generally to fortification of foods with oxidatively unstable fatty acids and, more particularly, to fortification of cereal bars with omega-3 polyunsaturated fatty acids.

### BACKGROUND OF THE INVENTION

Long chain polyunsaturated fatty acids have been shown to be beneficial to human health. In particular, long chain polyunsaturated omega-3 fatty acids have been shown to be especially beneficial. The three that are of primary interest include: linolenic acid (18:3w-3); eicosapentaenoic acid (EPA) (20:5w-3); and docosahexaenoic acid (DHA) (22:6w-3). The health benefits associated with enhanced consumption of these omega-3 fatty acids include a lowering of serum cholesterol, reduction of blood pressure, reduction in the risk of heart disease, and a reduction in the risk of stroke. In addition, these omega-3 fatty acids are essential to normal neuronal development and their depletion has been associated with neurodegenerative diseases such as Alzheimer's disease. In the human eye and retina the ratio of DHA:EPA is 5:1 and their presence is necessary for normal eye development. The fatty acid DHA is also believed to be essential for optimal cognitive development in infants. Food fortified with DHA is often called "brain food" in Asian countries. Preliminary studies suggest that long chain polyunsaturated omega-3 fatty acids may play a role in mediating chronic inflammatory assaults and their use by individuals with mild asthma has been documented to reduce the severity of the histamine response in asthmatics.

There are two main sources of beneficial long chain polyunsaturated omega-3 fatty acids. Plants provide an abundant source of linolenic acid. Marine animals, such as fish and crustaceans, and marine plants, such as micro algae, provide the main source of EPA and DHA. In particular, fatty fish such as mackerel and salmon contain high levels of EPA and DHA. Marine micro algae contain predominantly DHA. Marine micro algae have an advantage as a source of DHA in that large volumes can be rapidly produced using modem methods and there is no need for the extensive acreage associated with fish farms or the difficulty of fishing. The omega-3 fatty acids are generally found in the form of triglycerides, i.e. one or more of the fatty acids connected to the glycerol backbone is an omega-3 fatty acid, and not in the form of free fatty acids. Both forms have the health benefits and the problems of oxidative instability. Therefore in this specification and the associated claims no distinction will be made between these two forms of omega-3 fatty acids. In this specification and the associated claims the term omega-3 fatty acid refers to both the free fatty acid form and the triglyceride form unless specifically noted otherwise.

The beneficial effects of the omega-3 fatty acids, especially EPA and DHA, require relatively large amounts of the omega-3 fatty acids making it impractical to obtain the recommended daily amount merely by consuming fish. Thus, both have been made available in caplet form. Consumers do not generally enjoy consuming the caplets in part because they are large and also because the caplets can rapidly develop a fishy rancid type odor and taste. Prior attempts to add DHA and/or EPA directly to foods have been unsuccessful because they are very unstable and rapidly give rise to a fishy odor and taste upon oxidation, there by making the food unpalatable. It is believed that DHA and EPA are particularly unstable in the presence of water and heat, therefore their use in foods has been complicated and largely unsuccessful.

It is desirable to provide a simple process to allow for incorporation of oxidatively unstable fatty acids such as EPA, DHA and linolenic acid into foods that do not involve use of complex stabilizers and processing and that maintain the omega-3 fatty acids in a stable state over extended storage periods of at least 3 months.
JP 07 107938 (Saneigen FFI KK) discloses a composition containing DHA, in which rapid odour change and oxidation is avoided.
EP 1 338 295 (Nestec SA) discloses a fruit filled bar composition comprising encapsulated omega-3 fatty acids.
WO 2007/008384 (Mattson, et al.) discloses food articles comprising delivery devices and method of preparing such articles.

### SUMMARY OF THE INVENTION

In general terms, this invention provides a method of forming a fruit filled bar comprising the steps of: providing a dough comprising a carrier oil and a powdered omega-3 fatty acid; providing a fruit based filling; co-extruding the fruit based filling and the dough so the dough completely surrounds the filling; and baking the bar.

These and other features and advantages of this invention will become more apparent to those skilled in the art from the detailed description of a preferred embodiment.

### DETAILED DESCRIPTION OF A PREFERRED EMBODIMENT

As discussed above marine animals and marine plants are the main sources of EPA and DHA fatty acids. The use of fish oils as a source of EPA and DHA is well known. Recently, a number of manufactures have developed processes for growing marine micro algae with high efficiency. These micro algae are a great source of EPA and DHA at very high yields in a completely renewable process. Such micro algae derived EPA and DHA are available from a number of sources. One source of micro algae derived EPA and DHA is Martek Biosciences Corporation, Columbia, MD, USA. A second source of micro algae derived EPA and DHA is Nutrinova Nutrition Specialties and Food Ingredients, DE. Preferably, the omega-3 fatty acids are provided as a free flowing powder for the present invention. Typically, the fatty acids are encapsulated in a matrix comprising carbohydrates or protein. They are also available as free flowing powders. One such powder is designated by Martek Biosciences Corp. as Martek DHA™ powder KS35. In the examples disclosed in the present application this Martek powder was used; however, other powdered sources of DHA and EPA are expected to be equally useful in practicing the present invention. The omega-3 fatty acids can be provided as the free fatty acid or in the form of triglycerides, generally the triglyceride form is more stable. In the present specification and claims unless specifically noted there will be no distinction made between the free fatty acid form or the triglyceride form of the omega-3 fatty acids.

It is desirable to develop a method for incorporation of omega-3 fatty acids into baked goods. In the past several attempts have been made with no success. By way of example in the present specification a fruit filled baked bar will be used as the test food form. It is to be understood that the present invention will find utilization in a variety of baked goods other than those specifically described as long as low temperature processing steps and the dough formation processing steps, described below, are followed. As noted above the powdered omega-3 fatty acids used were from Martek and designated as Martek DHA™ powder KS35. This powder contained from about 100 to 130 milligrams of DHA per gram of powder. It is desirable to provide from 30 to 160 milligrams of DHA per serving of food.

It was believed that the powdered omega-3 fatty acids could be protected by incorporating them into the dough of the product and that the oil used in the dough might influence the stability of the omega-3 fatty acid. A variety of oils were tested as described below. The basic processing steps are as follows: formation of the dough; formation of the fruit-based filling material; coextrusion of the dough and fruit-based filling at a low temperature of less than about 55°C (130°F) with cutting to length, the dough surrounding the fruit-based filling; optional sprinkling of the uncooked bars with oat or bran topping; baking the bars at approximately 200°C (390° F) for about 8 minutes; cooling the bars; and packaging the bars. The final baked bar preferably has a water activity of 0.7 or less.

In a first series of examples the dough was prepared as described in Table 1 below. The selected fats tested were as follows: a mid oleic sunflower oil; a blend of partially hydrogenated soybean oil with fully hydrogenated cottonseed oil and liquid cottonseed oil; a partially hydrogenated soybean oil; a blend of low linolenic soybean oil and interesterified palm and palm kernel oil; and three different palm oils. The palm oils were designated as palm oil 1 or 2 or 3. Following baking of the bars they were cooled, packaged and then tested immediately for a variety of aromas, flavors, and textures by trained organoleptic evaluators Additional samples of each condition were stored at 30°C (85° F) 50% relative humidity and analyzed at various time intervals.

**TABLE 1**

| Component | % by weight based on final weight of the dough |
|---|---|
| Tested Carrier oil | 7- 15 |
| Omega-3 fatty acid powder | 1-3 |
| Duralox® antioxidant | 0.0-0.1 |
| Citric acid | 0.0-0.1 |
| Cream the above components in a PEERLES single arm mixer | |
| Flavoring | 0.0 - 3.0 |
| High Fructose Corn Syrup | 5-15 |
| Vitamin and mineral blend | 0 - 3 |
| Sugar | 5-20 |
| Mix on high for 6 minutes | |
| Milk powder | 0-2 |
| Pastry flour | 25-35 |
| Salt | 0.0-1.0 |
| Dough conditioner | 0.0-1.0 |
| Sodium bicarbonate | 0.3-0.7 |
| Water | 5-10 |
| Mix on high for 3 minutes | |
| Oatmeal | 10-20 |
| Mix on high for 1.5 minutes | |

The fruit based filling is a typical fruit based filling as is know in the industry. The filling typically comprises: high fructose corn syrup, corn syrup, fruit puree concentrate, glycerin, sugar, modified corn starch, sodium citrate, citric acid, sodium alginate, natural and artificial flavors, dicalcium phosphate, modified cellulose, colorings, and malic acid. Any known filling material can be used in the invention. The stability of the omega-3 fatty acids is not altered by the filling composition in this invention. Generally the finished bar comprises from 55 to 65% by weight dough with the remainder being filling. The prepared samples all had 40 milligrams of DHA per 37 gram final bar weight.

The bars were prepared as described above using the co-extrusion and baking steps described. The samples prepared with mid oleic sunflower oil were fine immediately after preparation. But they had developed a metallic taste and aroma after 6 weeks of storage and by 9 weeks all samples failed due to a metallic and a fishy aroma and taste. The samples prepared with a blend of partially hydrogenated soybean oil with fully hydrogenated cottonseed oil and liquid cottonseed oil were fine immediately after preparation. After 6 weeks of storage, however, they had developed a metallic taste and aroma and by 9 weeks all samples failed due to a metallic and a fishy aroma and taste. The samples prepared with a partially hydrogenated soybean oil were fine immediately after preparation; however, after 6 weeks of storage they had developed a metallic taste and aroma and by 9 weeks all samples failed due to a metallic and a fishy aroma and taste. The samples prepared with a blend of low linolenic soybean oil and interesterified palm and palm kernel oil were fine immediately after preparation; however, after 6 weeks of storage they had developed a metallic taste and aroma and by 9 weeks all samples failed due to a metallic and a fishy aroma and taste. The samples prepared with palm oil 1 were fine immediately after preparation; however, after 6 weeks of storage they had developed a metallic taste and aroma and by 9 weeks all samples failed due to a metallic and a fishy aroma and taste.

The samples prepared with either palm oil 2 or palm oil 3 were fine immediately after preparation. Unlike all of the other oils tested including palm oil 1, none of samples prepared with either palm oil 2 or palm oil 3 developed any metallic, fishy or other off aromas or tastes over a 12 week period of storage. The palm oils 2 and 3 shared the following characteristics: an oxidative stability index in hours measured according to AOCS method CD12B-92 of 30 or greater and a solid fat content at 2°C of 40 or greater. These characteristics were not found in palm oil 1 or in any of the other tested oils. The storage stability time for samples prepared with palm oil 2 or 3 has been extended to beyond 12 weeks. In subsequent experiments samples were prepared with palm oil 2 or palm oil 3 as described above. The samples were then stored at 30°C (85° F) 50% relative humidity for 12 weeks and then transferred to storage conditions of 21°C (70° F) 50% relative humidity for a total storage time of 16 weeks. Samples were evaluated periodically and all samples were stable over the entire testing period no development of detectable fishy aroma or taste. Other samples were stored at 21°C (70° F) and 50% relative humidity and these were stable for 7 months. Still other samples were stored at 7°C (45° F) for 12 weeks and then moved to 21°C (70° F) any 50% relative humidity and these samples were stable for 8 months. The results demonstrate that of the oils tested only oils having the characteristics of an oxidative stability index in hours of 30 or greater and a solid fat content at 21°C of 40 or greater stabilized the omega-3 fatty acids in the baked food product. Carrier oils expected to have these characteristics include by way of example certain palm oils, palm oil fractions, palm kernel oils, palm kernel oil fractions, and blends thereof. In addition, the omega-3 fatty acids may be entrapped in a fat, carbohydrate and protein matrix in the dough prior to exposure to the high temperature of the baking step and thereby protected. The process generally uses low temperatures during formation of the dough and extrusion and this is also beneficial to preservation of the omega-3 fatty acids.

Subsequent experimentation has demonstrated that it is not necessary to cream the omega-3 fatty acid powder into the carrier oil. Instead the carrier oil and omega-3 fatty acid powder can be directly combined with the flavoring, high fructose corn syrup, sugar, and vitamins in the dough.

Other antioxidants that can be used in addition to, or in place of Duralox® and citric acid include: tocopherols; ascorbic acid; ascorbyl palmitate; rosemary extract; butylated hydroxytoluene (BHT); butylated hydroxyanisol (BHA); or tert-butyl-1,4-benzenediol (TBHQ).

Many other types of dough formulations could be used as are known in the art. Preferably the amount of carrier oil in the dough will range from 5 to 20% by weight and more preferably from 5 to 15% by weight. Preferably the amount of DHA and/or EPA will be at least 0.5 milligram per gram of dough and provide from 30 to 160 milligrams of DHA and/or EPA per serving of the bar. The temperature of the extrusion should be kept at less than 55°C (130° F) and more preferably from 35 to 52°C (95° to 125°) and most preferably from 35 to 50°C (95° to 120° F) 35 to 52°C.

## Claims

1. A method of forming a fruit filled bar comprising the steps of:
a) providing a dough comprising a carrier oil and a powdered omega-3 fatty acid comprising docosahexaenoic acid, eicosapentaenoic acid, or mixtures thereof, said carrier oil having an oxidative stability index in hours of 30 or greater and a solid fat content at 21°C of 40 or greater;
b) providing a fruit based filling;
c) co-extruding the fruit based filling and the dough so the dough completely surrounds the filling; and
d) baking the bar.

2. The method of forming a fruit filled bar according to claim 1 wherein step a) comprises providing a dough having from 5 to 20% by weight based on the weight of the dough of carrier oil.

3. The method of forming a fruit filled bar according to claim 1 wherein step a) comprises providing a dough having at least 0.5 milligram of at least one omega-3 fatty acid comprising docosahexaenoic acid, eicosapentaenoic acid, or mixtures thereof per gram of dough.

4. The method of forming a fruit filled bar according to claim 1 wherein step c) comprises co-extruding the fruit based filling and the dough at a temperature of less than 55 °C (130° F).

5. The method of forming a fruit filled bar according to claim 1 wherein step c) comprises co-extruding the fruit based filling and the dough at a temperature of from 35 °C (95 °F) to 52 °C (125° F).

6. The method of forming a fruit filled bar according to claim 1 wherein step c) comprises co-extruding the fruit based filling and the dough at a ratio of 55 to 65% by weight dough and from 45 to 35% by weight filling.

7. The method of forming a fruit filled bar according to claim 1 wherein step d) comprises baking the bar to a final water activity level of 0.7 or less.

8. The method of forming a fruit filled bar according to claim 1 wherein step a) comprises providing a carrier oil comprising a palm oil, a palm oil fraction, a palm kernel oil, a palm kernel oil fraction, or a blend thereof.

9. A baked bar comprising:
a fruit based filling surrounded by a dough layer;
said dough layer comprising a carrier oil and at least one omega-3 fatty acid comprising docosahexaenoic acid, eicosapentaenoic acid, or a mixture thereof; and
said carrier oil having an oxidative stability index in hours of 30 or greater and a solid fat content at 21°C of 40 or greater.

10. A baked bar according to claim 9 wherein said fruit based filling and said dough layer are co-extruded with said fruit based filling inside said dough layer.

11. A baked bar according to claim 9 wherein said dough layer comprises from 5 to 20% by weight of a carrier oil based on the total weight of the dough layer.

12. A baked bar according to claim 9 wherein said dough layer comprises at least 0.5 milligram of at least one omega-3 fatty acid comprising docosahexaenoic acid, eicosapentaenoic acid, or a mixture thereof per gram of said dough layer.

13. A baked bar according to claim 9 wherein said dough layer comprises from 55 to 65% by weight of said bar and said filling comprises from 45 to 35% by weight of said bar.

14. A baked bar according to claim 9 wherein said baked bar has a water activity of less than or equal to 0.7.

15. A baked bar according to claim 9 wherein said baked bar is stable for at least 12 weeks under storage conditions of 30 °C (85 °F) and 50% relative humidity as determined by an absence of detectable fishy aroma or taste.

## Patentansprüche

1. Verfahren zum Bilden eines mit Frucht gefüllten Riegels, umfassend die Schritte des:
a) Bereitstellens eines Teigs, der ein Trägeröl und eine pulverförmige Omega-3-Fettsäure umfasst, die Docosahexaensäure, Eicosapentaensäure oder Mischungen davon umfasst, wobei das Trägeröl einen Oxidationsstabililitätsindex in Stunden von 30 oder mehr und einen Festfettgehalt bei 21 °C von 40 oder mehr aufweist;
b) Bereitstellens einer Füllung auf Fruchtbasis;
c) Coextrudierens der Füllung auf Fruchtbasis und des Teigs, so dass der Teig die Füllung vollständig umgibt; und
d) Backens des Riegels.

2. Verfahren zum Bilden eines mit Frucht gefüllten Riegels nach Anspruch 1, wobei Schritt a) das Bereitstellen eines Teigs umfasst, der 5 bis 20 Gew.% Trägeröl, auf das Gewicht des Teigs bezogen, aufweist.

3. Verfahren zum Bilden eines mit Frucht gefüllten Riegels nach Anspruch 1, wobei Schritt a) das Bereitstellen eines Teigs umfasst, der mindestens 0,5 Milligramm mindestens einer Omega-3-Fettsäure, die Docosahexaensäure, Eicosapentaensäure oder Mischungen davon umfasst, pro Gramm Teig aufweist.

4. Verfahren zum Bilden eines mit Frucht gefüllten Riegels nach Anspruch 1, wobei Schritt c) das gleichzeitige Extrudieren der Füllung auf Fruchtbasis und des Teigs bei einer Temperatur von weniger als 55 °C (130 °F) umfasst.

5. Verfahren zum Bilden eines mit Frucht gefüllten Riegels nach Anspruch 1, wobei Schritt c) das gleichzeitige Extrudieren der Füllung auf Fruchtbasis und des Teigs bei einer Temperatur von 35 °C (95 °F) bis 52 °C (125 °F) umfasst.

6. Verfahren zum Bilden eines mit Frucht gefüllten Riegels nach Anspruch 1, wobei Schritt c) das gleichzeitige Extrudieren der Füllung auf Fruchtbasis und des Teigs in einem Verhältnis von 55 bis 65 Gew.% Teig und 45 bis 35 Gew.% Füllung umfasst.

7. Verfahren zum Bilden eines mit Frucht gefüllten Riegels nach Anspruch 1, wobei Schritt d) das Backen des Riegels auf ein endgültiges Wasseraktivitätsniveau von 0,7 oder weniger umfasst.

8. Verfahren zum Bilden eines mit Frucht gefüllten Riegels nach Anspruch 1, wobei Schritt a) das Bereitstellen eines Trägeröls umfasst, das ein Palmöl, eine Palmölfraktion, ein Palmkernöl, eine Palmkernölfraktion oder eine Abmischung davon umfasst.

9. Gebackener Riegel umfassend:
eine von einer Teigschicht umgebene Füllung auf Fruchtbasis;
wobei die Teigschicht ein Trägeröl und mindestens eine Omega-3-Fettsäure umfasst, die Docosahexaensäure, Eicosapentaensäure oder eine Mischung davon umfasst; und
wobei das Trägeröl einen Oxidationsstabililitätsindex in Stunden von 30 oder mehr und einen Festfettgehalt bei 21 °C von 40 oder mehr aufweist.

10. Gebackener Riegel nach Anspruch 9, wobei die Füllung auf Fruchtbasis und die Teigschicht gleichzeitig extrudiert werden, wobei die Füllung auf Fruchtbasis sich innerhalb der Teigschicht befindet.

11. Gebackener Riegel nach Anspruch 9, wobei die Teigschicht 5 bis 20 Gew.% eines Trägeröls, auf das Gesamtgewicht der Teigschicht bezogen, umfasst.

12. Gebackener Riegel nach Anspruch 9, wobei die Teigschicht mindestens 0,5 Milligramm mindestens einer Omega-3-Fettsäure, die Docosahexaensäure, Eicosapentaensäure oder eine Mischung davon umfasst, pro Gramm der Teigschicht umfasst.

13. Gebackener Riegel nach Anspruch 9, wobei die Teigschicht 55 bis 65 Gew.% des Riegels umfasst und die Füllung 45 bis 35 Gew.% des Riegels umfasst.

14. Gebackener Riegel nach Anspruch 9, wobei der gebackene Riegel eine Wasseraktivität von weniger oder gleich 0,7 aufweist.

15. Gebackener Riegel nach Anspruch 9, wobei der gebackene Riegel unter Lagerbedingungen von 30 °C (85 °F) und einer relativen Feuchte von 50 % mindestens 12 Wochen lang haltbar, wie durch Abwesenheit eines wahrnehmbaren fischartigen Aromas oder Geschmacks bestimmt, ist.

## Revendications

1. Procédé de formation d'une barre de fruits, comprenant les étapes consistant à:
a) se procurer une pâte comprenant une huile de base et un acide gras oméga-3 pulvérulent comprenant de l'acide docosahexaénoïque, de l'acide éicosapentaénoïque, ou des mélanges de ceux-ci, ladite huile de base ayant un indice de stabilité à l'oxydation en heures de 30 ou plus et une teneur en matières grasses solides à 21°C de 40 ou plus;
b) se procurer une garniture à base de fruits;
c) co-extruder la garniture à base de fruits et la pâte de façon que la pâte entoure complètement la garniture; et
d) cuire la barre.

2. Procédé de formation d'une barre de fruits selon la revendication 1 dans lequel l'étape a) consiste à fournir une pâte contenant 5 à 20% en poids d'huile de base, rapporté au poids de la pâte.

3. Procédé de formation d'une barre de fruits selon la revendication 1 dans lequel l'étape a) consiste à fournir une pâte contenant au moins 0,5 milligramme d'au moins un acide gras oméga-3 comprenant de l'acide docosahexaénoïque, de l'acide éicosapentaénoïque, ou des mélanges de ceux-ci par gramme de pâte.

4. Procédé de formation d'une barre de fruits selon la revendication 1 dans lequel l'étape c) consiste à co-extruder la garniture à base de fruits et la pâte à une température inférieure à 55°C (130°F).

5. Procédé de formation d'une barre de fruits selon la revendication 1 dans lequel l'étape c) consiste à co-extruder la garniture à base de fruits et la pâte à une température de 35°C (95°F) à 52°C (125°F).

6. Procédé de formation d'une barre de fruits selon la revendication 1 dans lequel l'étape c) consiste à co-extruder la garniture à base de fruits et la pâte dans une proportion de 55 à 65% en poids de pâte et de 45 à 35% en poids de garniture.

7. Procédé de formation d'une barre de fruits selon la revendication 1 dans lequel l'étape d) consiste à cuire la barre à un niveau d'activité de l'eau final de 0,7 ou moins.

8. Procédé de formation d'une barre de fruits selon la revendication 1 dans lequel l'étape a) consiste à fournir une huile de base comprenant de l'huile de palme, une fraction d'huile de palme, de l'huile de palmiste, une fraction d'huile de palmiste, ou un mélange de celles-ci.

9. Barre cuite comprenant:
une garniture à base de fruits entourée par une couche de pâte;
ladite couche de pâte comprenant une huile de base et au moins un acide gras oméga-3 comprenant de l'acide docosahexaénoïque, de l'acide éicosapentaénoïque, ou un mélange de ceux-ci; et
ladite huile de base ayant un indice de stabilité à l'oxydation en heures de 30 ou plus et une teneur en matières grasses solides à 21 °C de 40 ou plus.

10. Barre cuite selon la revendication 9 dans laquelle ladite garniture à base de fruits et ladite couche de pâte sont coextrudées avec ladite garniture à base de fruits à l'intérieur de ladite couche de pâte.

11. Barre cuite selon la revendication 9 dans laquelle ladite couche de pâte comprend 5 à 20% en poids d'une huile de base, rapporté au poids total de la couche de pâte.

12. Barre cuite selon la revendication 9 dans laquelle ladite couche de pâte comprend au moins 0,5 milligramme d'au moins un acide gras oméga-3 comprenant de l'acide docosahexaénoïque, de l'acide éicosapentaénoïque, ou un mélange de ceux-ci par gramme de ladite couche de pâte.

13. Barre cuite selon la revendication 9 dans laquelle ladite couche de pâte comprend 55 à 65% en poids de ladite barre et ladite garniture comprend 45 à 35% en poids de ladite barre.

14. Barre cuite selon la revendication 9, ladite barre cuite présentant une activité de l'eau inférieure ou égale à 0,7.

15. Barre cuite selon la revendication 9, ladite barre cuite étant stable pendant au moins 12 semaines dans des conditions de stockage de 30°C (85°F) et 50% d'humidité relative, cette stabilité étant déterminée par une absence de goût ou d'arôme de poisson détectable.
